# EUROPÄISCHE PATENTSCHRIFT

(11) **EP 0 959 114 B1**
(45) Veröffentlichungstag und Bekanntmachung des Hinweises auf die Patenterteilung: **10.01.2001**
(21) Anmeldenummer: 99107367.7
(22) Anmeldetag: 22.04.1999
(51) Int. Cl.: C09D 131/02, C09J 131/02, A23G 3/30, C08F 218/04

(54) **Verfahren zur Herstellung von Vinylester-Ethylen-Mischpolymerisaten mit reduzierter Oberflächenklebrigkeit**
Process for preparing vinyl ester-ethylene copolymers with reduced surface tackiness
Procédé de préparation de copolymères d'ester vinyliques-ethylène à adhésivité superficielle réduite

(30) Priorität: 14.05.1998 DE 19821736
(43) Veröffentlichungstag der Anmeldung: 24.11.1999
(73) Patentinhaber: Wacker-Chemie GmbH, 81737 München (DE)
(72) Erfinder: Becker, Richard Dr., 84547 Emmerting (DE); Singer, Robert Dr., 84489 Burghausen (DE); Fleischmann, Gerald Dr., 84489 Burghausen (DE); Eck, Herbert Dr., 83646 Bad Tölz (DE)
(74) Vertreter: Schuderer, Michael, Dr.

(56) Entgegenhaltungen:
- EP-A- 0 757 065
- GB-A- 1 176 667
- US-A- 2 657 188

## Beschreibung

Die Erfindung betrifft ein Verfahren zur Herstellung von Vinylester-Ethylen-Mischpolymerisaten mit reduzierter Oberflächenklebrigkeit mittels Copolymerisation von Propylen.

Vinylester-Homopolymerisate, insbesondere Polyvinylacetat, werden in Form deren Festharze, deren wässrigen Dispersionen oder als in Wasser redispergierbare Dispersionspulver in vielen Anwendungen eingesetzt. Polyvinylacetat-Festharze werden in Kaugummimassen eingesetzt. Wässrige Dispersionen oder in Wasser redispergierbare Pulver von Polyvinylacetat können zur Herstellung von Beschichtungsmitteln wie Dispersionsfarben oder Putzen, zur Beschichtung von Textilien, oder als Bindemittel in Klebstoffen eingesetzt werden. Nachteilig bei Vinylacetathomopolymerisaten ist deren hohe Glasübergangstemperatur, mit der Folge, daß diese Polymerisate für viele Anwendungen zu hart und zu spröde sind.

Neben der Weichmachung von Vinylester-Homopolymerisaten mit Weichmachern wird daher vielfach der Weg der innerlichen Weichmachung beschritten, bei dem der Vinylesteranteil mit Ethylen copolymerisiert wird. Neben Vinylacetat-Homopolymerisaten haben sich daher Vinylacetat-Ethylen-Mischpolymerisate in den obengenannten Anwendungen etabliert. In der US-A 4,968,511 werden Vinylacetat-Ethylen-Copolymerisate als Grundstoff für die Herstellung von Kaugummimassen beschrieben. In der EP-B 295727 werden wässrige Dispersionen von Vinylacetat-Ethylen-Copolymerisaten als Bindemittel für Beschichtungsmittel erwähnt.

Nachteilig bei der innerlichen Weichmachung von Vinylacetatpolymerisaten durch Copolymerisation mit Ethylen ist allerdings die starke Oberflächenklebrigkeit und geringe Alkalibeständigkeit der damit erhaltenen Polymerisate. Der EP-B 295727 und der JP-B 72-3705 (Derwent-Abstract AN 72-08243T) ist zu entnehmen, daß die Oberflächenklebrigkeit von Vinylacetat-Ethylen-Copolymerisaten durch Copolymerisation mit Vinylester einer alpha-verzweigten Carbonsäure mit 9 C-Atomen (VeoVa^{R}9) reduziert werden kann. Die Copolymerisation mit VeoVa^{R}9 verteuert allerdings die Herstellung der Produkte in einem für viele Anwendungen nicht tragbaren Ausmaß. Für Kaugummimassen wird in der JP-A 48-2338 (CA-Abstract 79:114225) zur Weichmachung des Polyvinylacetat-Basisharzes die Copolymerisation mit Propylen empfohlen. Nachteilig ist, daß zur Weichmachung mit Propylen wesentlich höhere Mengen an Propylen als mit Ethylen eingesetzt werden müssen, ohne die mit Ethylen zugängliche Weichheit zu erreichen.

Es bestand daher die Aufgabe, ein Verfahren zur Verfügung zu stellen, mit welchem die Oberflächenklebrigkeit von Vinylester-Polymerisaten abgesenkt werden kann, ohne daß die obengenannten Nachteile auftreten.

Gegenstand der Erfindung ist ein Verfahren zur Herstellung von Vinylester-Ethylen-Mischpolymerisaten mit reduzierter Oberflächenklebrigkeit durch radikalische Polymerisation von einem oder mehreren Vinylestern, Ethylen und Propylen, dadurch gekennzeichnet, daß
50 bis 95 Mol% Vinylester, und
5 bis 50 Mol% eines Gemisches aus Ethylen und Propylen copolymerisiert werden, wobei das molare Mischungsverhältnis von Ethylen zu Propylen von 2/1 bis 5/1 beträgt, und die
Glasübergangstemperatur Tg des Mischpolymerisats auf Werte von -15°C bis +15°C eingestellt wird.

Geeignete Vinylester sind solche von unverzweigten oder verzweigten Alkylcarbonsäuren mit 1 bis 15 C-Atomen, vorzugsweise Vinylacetat, Vinylpropionat, Vinylbutyrat, Vinyl-2-ethyl-hexanoat, Vinyllaurat, 1-Methylvinylacetat, Vinylpivalat und Vinylester von alpha-verzweigten Monocarbonsäuren mit 5 bis 11 C-Atomen, beispielsweise VeoVa5^{R}, VeoVa9^{R} oder VeoVa11^{R}. Die Vinylester können gegebenenfalls auch im Gemisch mit weiteren Comonomeren wie Methacrylsäureester und Acrylsäureester von Alkoholen mit 1 bis 10 C-Atomen, Vinylaromaten wie Styrol und/oder Vinylchlorid eingesetzt werden. Besonders bevorzugt wird Vinylacetat eingesetzt, gegebenenfalls im Gemisch mit weiteren Vinylestern oder Acrylsäureestern.

Gegebenenfalls können die Mischpolymerisate 0.01 bis 10.0 Gew%, bezogen auf das Gesamtgewicht des Mischpolymerisats, noch ein oder mehrere Hilfsmonomere aus der Gruppe der ethylenisch ungesättigten Mono- oder Dicarbonsäuren wie Acrylsäure, Methacrylsäure, Maleinsäure, Fumarsäure, Itaconsäure, der ethylenisch ungesättigten Carbonsäureamide, vorzugsweise Acrylamid, aus der Gruppe der ethylenisch ungesättigten Sulfonsäuren bzw. deren Salze, vorzugsweise Vinylsulfonsäure, aus der Gruppe der mehrfach ethylenisch ungesättigten Comonomeren, beispielsweise Divinyladipat, Diallylmaleat, Allylmethacrylat oder Triallylcyanurat und/oder aus der Gruppe der N-Methylol(meth)acrylamide sowie deren Ether wie Isobutoxy- oder n-Butoxyether enthalten.

Wesentlich ist, daß die Zusammensetzung der Comonomermischung so gewählt wird, daß eine Glastemperatur Tg von -15°C bis +15°C resultiert. Die Glasübergangstemperatur Tg kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Besonders bevorzugt werden zur Polymerisation Comonomermischungen enthaltend 50 bis 80 Mol% Vinylester, insbesondere Vinylacetat, und 20 bis 50 Mol% Ethylen und Propylen in einem Mischungsverhältnis von 2/1 bis 5/1.

Die Herstellung der Mischpolymerisate erfolgt in an sich bekannter Weise, vorzugsweise nach dem Emulsionspolymerisationsverfahren oder dem Lösungspolymerisationsverfahren.

Die Polymerisation wird in bekannter Weise in Druckgefäßen, in einem Temperaturbereich von 0°C bis 100°C, vorzugsweise 50°C bis 80°C, und bei einem Druck von vorzugsweise 10 bis 80 bar, durchgeführt und mit den gebräuchlichen, organo- oder wasserlöslichen Radikalbildner eingeleitet, die vorzugsweise in Mengen von 10 bis 200 mMol je kg des gesamten Monomergemisches eingesetzt werden. Beispiele für organolösliche Initiatoren sind Dialkyl-, Diacyl- und Diaroylperoxide wie Dilauroylperoxid, Peroxodicarbonate wie Dicetylperoxodicarbonat, Perester wie t-Amylperoxopivalat. Bevorzugt werden als öllösliche Initiatoren solche, welche nicht oder nur schwach wasserstoffabstrahierend wirken. Beispiele hierfür sind sekundäre Peroxodicarbonate oder tertiäre Amylester.

Beispiele für wasserlösliche Initiatoren sind Wasserstoffperoxid, Ketonperoxide und Alkylhydroperoxide, wie tert.-Butylhydroperoxid; Azoverbindungen, wie Azobisisobutyronitril oder Azobiscyanovaleriansäure. Gegebenenfalls können die genannten wasserlöslichen, radikalischen Initiatoren auch in bekannter Weise mit 10 bis 200 mMol je kg des gesamten Monomerengemisches mit wasserlöslichen Reduktionsmitteln wie reduzierenden Schwefelverbindungen oder Ascorbinsäure kombiniert werden. In einer besonders bevorzugten Ausführungsform wird die Polymerisation durch Nachpolymerisation mit H₂O₂ und Reduktionsmittel vervollständigt.

Für die Lösungspolymerisation geeignete Lösungsmittel sind beispielsweise Alkohole wie Ethanol, Ester wie Methylacetat, Ketone wie Aceton und Ether wie t-Butylmethylether.

Zur Emulsionspolymerisation im wässrigen Medium werden in bekannter Weise anionische oder nichtionische Emulgatoren, vorzugsweise in einer Menge von 0.5 bis 15 Gew%, bezogen auf die Monomerphase, eingesetzt. Diese können dabei ganz oder teilweise vorgelegt oder dosiert werden. Beispiele für Emulgatoren sind Alkali- oder Erdalkalisalze von alkylierten Benzol- oder Naphthalinsulfonsäuren wie Natriumdodecylsulfonat, Alkalialkylsulfonate wie Natriumlaurylsulfonat, Alkalisalze der Alkylsulfate wie Natriumlaurylsulfat, Natriumalkylsulfosuccinat und Natriumsulfosuccinathalb- und -vollester, Natrium- oder Ammoniumsalze von Sulfatestern von Alkylphenoxypoly(ethoxylen)ethanolen wie Octyl- oder iso-Nonylphenoxypoly(ethoxylen)ethanolen sowie deren ethoxylierte Produkte, Ethylenoxidaddukte von Alkylglykolen und Alkylphenolen, Blockcopolymere aus Ethylenoxid und Propylenoxid, sulfonierte Fettsäureamide, Fettalkohol- oder Fettamin-Ethylenoxidadditionsprodukte.

Die genannten Emulgatoren können gegebenenfalls auch in Kombination mit Schutzkolloiden eingesetzt werden. Als Schutzkolloide eignen sich sowohl synthetische, wasserlösliche Polymere wie Polyvinylalkohole, Polyvinylpyrrolidone, Polyvinylpyridin, Copolymere aus Maleinsäure, Fumarsäure oder deren Monoester, Maleinsäureanhydrid oder deren Salze mit Styrol oder Vinylethern, als auch natürliche wasserlösliche Polymere wie Casein, Gelatine, Proteine, Methylcellulose, Hydroxyethylcellulose, Carboxymethylcellulose, Dextrine, Stärke und Stärkederivate.

Zur Durchführung der Polymerisation wird das Lösungsmittel oder das Reaktionswasser, letzteres zusammen mit der erforderlichen Menge an Emulgator und/oder Schutzkolloid, vorgelegt. Der Polymerisationsinitiator kann ganz oder teilweise vorgelegt werden oder erst nach dem Aufheizen auf die Polymerisationstemperatur zudosiert werden. Nach dem Einbringen der Vorlage wird Propylen aufgedrückt, vorzugsweise unter Abkühlen der Vorlage. Das Propylen kann entweder vollständig vorgelegt oder während der Reaktion nachgedrückt werden. Das Ethylen wird durch Aufpressen während der Reaktion dosiert. Die weiteren Comonomere, insbesondere die Vinylester-Comonomere, werden während der Polymerisation dosiert oder teilweise vorgelegt und der Rest dosiert.

Zur Beendigung der Polymerisation wird vorzugsweise die Reaktionstemperatur um 5 bis 10°C erhöht. Schließlich wird der Ansatz abgekühlt, überschüssiges Ethylen und Propylen beispielsweise durch Abblasen entfernt. Bei den Lösungspolymerisaten wird das Polymerisat in bekannter Weise durch Abdestillieren des Lösungsmittels gewonnen. Die mit dem Emulsionspolymerisationsverfahren erhältlichen wässrigen Dispersionen können direkt verwendet werden oder zu in Wasser redispergierbaren Dispersionspulvern weiterverarbeitet werden.

Zur Herstellung von in Wasser redispergierbaren Dispersionspulvern werden die Dispersionen mittels Sprühtrocknung getrocknet. Die Trocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Die Polymerisationsprodukte eignen sich als Bindemittel in Beschichtungsmitteln und Lacken, als Klebemittel, als Bindemittel für Textilien, Papier und Bauprodukten, sowie als Bestandteil in Kaugummimassen.

Die mit der erfindungsgemäßen Verfahrensweise erhältlichen wässrigen Dispersionen oder in Wasser redispergierbaren Dispersionspulver eignen sich bevorzugt zur Verwendung als Beschichtungsmittel, als Klebemittel oder als Bindemittel in der Textil-, Papier und Bauindustrie. Besonders bevorzugt wird die Verwendung als Beschichtungsmittel, insbesondere in Glanzfarben, da bei dem darin üblichen, relativ hohen Bindemittelanteil, die Problematik der Oberflächenklebrigkeit besonders akut ist. Die Polymerdispersionen und Dispersionspulver werden in den Beschichtungsmitteln in den üblichen Rezepturen zusammen mit Wasser, Füllstoffen, Pigmenten sowie Hilfsmitteln aus der Gruppe der Netzmittel, Dispergiermittel, Verdickungsmittel, Entschäumer und Konservierungsmittel eingesetzt.

Die mit der erfindungsgemäßen Verfahrensweise erhältlichen Lösungspolymerisate eignen sich vorzugsweise zur Verwendung als Beschichtungsmittel in Lacken, als Klebemittel und als Bestandteil von Kaugummimassen. Besonders bevorzugt wird die Verwendung als Komponente in nichtklebenden Kaugummimassen. Geeignete Rezepturen für Kaugummimassen sind dem Fachmann bekannt und enthalten neben dem Lösungspolymerisat noch Füllstoffe wie Calciumcarbonat oder Talk, Weichmacher wie Polyisobutylen und Zusatzstoffe wie Süßstoff, Aromastoffe, Konservierungsmittel. Durch den Einsatz der erfindungsgemäß erhältlichen Lösungspolymerisate kann auf den Einsatz der üblichen Isobutylen-Weichmacher für Polyvinylester-Basisharze ganz oder teilweise verzichtet werden.

### Beispiel 1:

In einem 2 l Rührautoklaven mit Temperiermantel wurden 197 g Ethanol, 325 g Vinylacetat und 3.94 g t-Amylperoxopivalat vorgelegt und 66 g Propylen unter Abkühlen der Vorlage eingepreßt. Nach Erwärmen auf 70°C wurde Ethylen mit 30 bar aufgedrückt. Dann wurden 988 g Vinylacetat innerhalb von 4 Stunden und eine Lösung von 15.3 g t-Amylperoxopivalat in 57 g Ethanol in 6 Stunden zudosiert. Die Ethylendosierung wurde nach Ende der Vinylacetatdosierung beendet. Anschließend wurde 30 Minuten auf 80°C aufgeheizt, auf Raumtemperatur abgekühlt, überschüssiges Ethylen und Propylen abgeblasen und das Polymer durch Abdampfen des Lösungsmittels isoliert.
Das Polymer hatte einen Propylengehalt von 9.7 Mol% und einen Ethylengehalt von 21.9 Mol%, ein gewichtsmittleres Molekulargewicht Mw von 32500 (Gelpermeationschromatographie), einen K-Wert von 31 und eine Tg von 7.5°C.

### Vergleichsbeispiel 1:

In einem 2 l Rührautoklaven mit Temperiermantel wurden 167 g Ethanol, 275 g Vinylacetat und 3.34 g t-Amylperoxopivalat vorgelegt, auf 70°C erwärmt und 30 bar Ethylen aufgedrückt. Dann wurden 839 g Vinylacetat innerhalb von 4 Stunden und eine Lösung von 13 g t-Amylperoxopivalat in 49 g Ethanol in 5 Stunden zudosiert. Die Ethylendosierung wurde nach Ende der Vinylacetatdosierung beendet. Anschließend wurde 30 Minuten auf 80°C aufgeheizt, auf Raumtemperatur abgekühlt, überschüssiges Ethylen abgeblasen und das Polymer durch Abdampfen des Lösungsmittels isoliert.
Das Polymer hatte einen Ethylengehalt von 31.1 Mol%, ein gewichtsmittleres Molekulargewicht Mw von 27500 (Gelpermeationschromatographie), einen K-Wert von 28 und eine Tg von -3°C.

### Beispiel 2:

In einem 2 l Rührautoklaven mit Temperiermantel wurden 140 g Ethanol, 232 g Vinylacetat und 2.81 g t-Amylperoxopivalat vorgelegt und 94 g Propylen unter Abkühlen der Vorlage eingepreßt. Nach Erwärmen auf 70°C wurde Ethylen mit 60 bar aufgedrückt. Dann wurden 705 g Vinylacetat innerhalb von 4 Stunden und eine Lösung von 10.9 g t-Amylperoxopivalat in 41 g Ethanol in 6 Stunden zudosiert. Die Ethylendosierung wurde nach Ende der Vinylacetatdosierung beendet. Anschließend wurde 30 Minuten auf 80°C aufgeheizt, auf Raumtemperatur abgekühlt, überschüssiges Ethylen und Propylen abgeblasen und das Polymer durch Abdampfen des Lösungsmittels isoliert.
Das Polymer hatte einen Propylengehalt von 12 Mol% und einen Ethylengehalt von 37.5 Mol%, ein gewichtsmittleres Molekulargewicht Mw von 30000 (Gelpermeationschromatographie), einen K-Wert von 32 und eine Tg von -9°C.

### Beispiel 3:

In einem 2 l Rührautoklaven mit Temperiermantel wurden 146 g Ethanol, 240 g Vinylacetat und 2.91 g t-Amylperoxopivalat vorgelegt und 48.5 g Propylen unter Abkühlen der Vorlage eingepreßt. Nach Erwärmen auf 70°C wurde Ethylen mit 60 bar aufgedrückt. Dann wurden 730 g Vinylacetat innerhalb von 4 Stunden und eine Lösung von 11.3 g t-Amylperoxopivalat in 42 g Ethanol in 6 Stunden zudosiert. Die Ethylendosierung wurde nach Ende der Vinylacetatdosierung beendet. Anschließend wurde 30 Minuten auf 80°C aufgeheizt, auf Raumtemperatur abgekühlt, überschüssiges Ethylen und Propylen abgeblasen und das Polymer durch Abdampfen des Lösungsmittels isoliert.
Das Polymer hatte einen Propylengehalt von 8 Mol% und einen Ethylengehalt von 38 Mol%, ein gewichtsmittleres Molekulargewicht Mw von 36500 (Gelpermeationschromatographie), einen K-Wert von 33.8 und eine Tg von -11°C.

### Vergleichsbeispiel 2:

In einem 16 l Rührautoklaven mit Temperiermantel wurden 796 g Ethanol, 2490 g Vinylacetat und 14.9 g t-Butylperoxopivalat vorgelegt, auf 70°C erwärmt und 65 bar Ethylen aufgedrückt. Dann wurden 7460 g Vinylacetat innerhalb von 4 Stunden und eine Lösung von 58 g t-Butylperoxopivalat in 435 g Ethanol in 5 Stunden zudosiert. Die Ethylendosierung wurde nach Ende der Vinylacetatdosierung beendet. Anschließend wurde 30 Minuten auf 80°C aufgeheizt, auf Raumtemperatur abgekühlt, überschüssiges Ethylen abgeblasen und das Polymer durch Abdampfen des Lösungsmittels isoliert.
Das Polymer hatte einen Ethylengehalt von 25.6 Mol%, ein gewichtsmittleres Molekulargewicht Mw von 49700 (Gelpermeationschromatographie), einen K-Wert von 36 und eine Tg von 7°C.

### Beispiel 4:

In einem 2 l Rührautoklaven mit Temperiermantel wurden 441 g vollentsalztes Wasser, 26.8 g einer 52 %-igen wässrigen Lösung eines Ölsäuresulfonats , 3.9 g einer 20 %-igen wässrigen Lösung des Natriumsalzes der Dodecylbenzolsulfonsäure, 221 g einer 3.3 %-igen Lösung von Ethylcellulose und 5.6 g einer 25 %-igen wässrigen Vinylsulfonat-Lösung vorgelegt und 164 g Vinylacetat eingerührt. Es wurde auf 45°C aufgeheizt und mit Ethylen auf 35 bar aufgedrückt, anschließend wurde eine 5.6 %-ige wässrige Lösung von Kaliumperoxodisulfat und zugleich eine 3 %-ige Lösung von Ascorbinsäure innerhalb von 6 Stunden zudosiert. 15 Minuten nach Reaktionsbeginn, erkennbar durch einen Temperaturanstieg der Reaktionsmischung, wurde eine Lösung von 41 g Propylen in 656 g Vinylacetat innerhalb von 5 Stunden zudosiert. Die Polymerisationstemperatur wurde dabei auf 45°C gehalten.
Das Polymer hatte einen Ethylengehalt von 8 Mol%, einen Propylengehalt von 4 Mol% und eine Glasübergangstemperatur von 11°C.

### Vergleichsbeispiel 3:

In einem 2 l Rührautoklaven mit Temperiermantel wurden 451 g vollentsalztes Wasser, 27.5 g einer 52 %-igen wäßrigen Lösung eines Ölsäuresulfonats , 3.9 g einer 20 %-igen wäßrigen Lösung des Natriumsalzes der Dodecylbenzolsulfonsäure, 226 g einer 3.3 %-igen Lösung von Ethylcellulose und 5.8 g einer 25 %-igen wässrigen Vinylsulfonat-Lösung vorgelegt und 168 g Vinylacetat eingerührt. Es wurde auf 45°C aufgeheizt und mit Ethylen auf 35 bar aufgedrückt, anschließend wurden 55.5 ml einer 5.6 %-ige wässrigen Lösung von Kaliumperoxodisulfat und zugleich 55,5 ml einer 3 %-igen wässrigen Lösung von Ascorbinsäure innerhalb von 6 Stunden zudosiert. 15 Minuten nach Reaktionsbeginn, erkennbar durch einen Temperaturanstieg der Reaktionsmischung, wurden 672 g Vinylacetat innerhalb von 5 Stunden zudosiert.
Die Polymerisationstemperatur wurde dabei auf 45°C gehalten. Das Polymer hatte einen Ethylengehalt von 13 Mol% und eine Glasübergangstemperatur von 7°C.

### Anwendungstechnische Prüfung:

### Prüfung der Oberflächenklebrigkeit:

Die Copolymeren wurden in Ethanol gelöst und auf einen Feststoffgehalt von 27 % eingestellt. Mit einem 200 µm Rakel wurde ein Film auf Schreibpapier (80 g/m²) gezogen und über Nacht bei Raumtemperatur getrocknet. Der getrocknete Film wurde 2 bis 3 Stunden bei 100°C getempert. Von der getemperten Papierbeschichtung wurden Quadrate mit den Maßen 5 x 5 cm² ausgeschnitten. Aus Papier oder PVC-Folie wurden Rechtecke mit den Maßen 5 x 5.5 cm² ausgeschnitten. Beide Rechtecke wurden miteinander verklebt (Filmoberseite auf Papier bzw. Filmoberseite auf Filmoberseite bzw. Filmoberseite auf PVC-Folie) und mit einem kleinen Stück Klebstreifen am Rand fixiert. Die Prüfkörper wurden auf einer Glasplatte gestapelt und mit einer zweiten Glasplatte bedeckt. Die beiden Glasplatten wurden mit Klebstreifen zusammengeklebt und mit einem 5 kg-Gewicht 24 Stunden beschwert bei Raumtemperatur gelagert. Danach wurden die Proben herausgenommen und die Verklebung qualitativ nach folgendem Beurteilungsschema beurteilt:
1 = nicht verklebt
2 = teilweise etwas verklebt, kein Papierausriß
3 = stark verklebt, ca. 30 % Papierausriß
4 = sehr stark verklebt, > 90 % Papierausriß

Die Ergebnisse sind in Tabelle 1 zusammengefaßt.
- S/P:: Verklebung Filmoberseite gegen Papier
- S/S:: Verklebung Filmoberseite gegen Filmoberseite
- S/PVC:: Verklebung Filmoberseite gegen PVC

**Tabelle 1:**

| Ergebnisse der Klebrigkeitsprüfung | | | |
|---|---|---|---|
| **Beispiel** | **Papier** | | **PVC** |
| | **S/P** | **S/S** | **S/PVC** |
| Bsp. 1 | 2 | 2 | 1 |
| V.bsp. 1 | 4 | | 2 |
| Bsp. 2 | 1 | 2 | |
| Bsp. 3 | 1 | 2 | 1 |
| V.bsp. 2 | 4 | 4 | 2 |

### Prüfung der Copolymerisate in Glanzfarben:

Für den Blocktest wurde ein Anstrichstoff der in Tabelle 2 angegebenen Zusammensetzung hergestellt. Die Pigment-Volumen-Konzentration (PVK) betrug 28.
Der zu prüfenden Anstrichstoff wurde mit einem Filmrakel (150 µm) mittels eines automatischen Filmziehgerätes auf Glanzkarton (Lenetta, weiß) aufgezogen. Unmittelbar danach wurde der beschichtete Glanzkarton 24 h im Normklima (23°C, 50 % rel. Luftfeuchte) getrocknet. Nach dem Trocknen wurden Probestreifen von 25 x 70 mm² ausgestanzt. Die Proben wurden mit doppelseitigem Klebeband auf Objektträger gleicher Abmessung befestigt. Die beschichteten Oberflächen wurden dann über Kreuz aufeinandergelegt, so daß eine Fläche von 2.5 x 2.5 cm² entstand. Anschließend wurden die Prüfkörper mit 2 kg Gewicht (entspricht 3 N/cm²) 2 Stunden im Klimaraum unter Normbedingungen belastet (verblockt). Dann wurde in einem Blocktest Meßgerät (Fa. Byk Gardner) die Entblockung bei einer Vorlaufgeschwindigkeit von 2.5 mm/s gemessen. Die Prüfergebnisse sind in Tabelle 3 zusammengefaßt.

**Tabelle 2:**

| Glanzfarben-Rezeptur (Mengen in Gewichtteilen) | |
|---|---|
| Rezepturbestandteil | Teile |
| Wasser | 213.2 |
| Verdicker auf Cellulosebasis | 1.8 |
| Verdicker auf PU-Basis (Rheolate 208) | 2.7 |
| Natronlauge (10 Gew%) | 5.4 |
| Antischaummittel | 1.8 |
| Calciumphosphat | 0.4 |
| Konservierungsmittel | 1.8 |
| Titandioxid | 178.8 |
| Kaolin, feinteilig | 89.4 |
| Polymerdispersion (45 Gew%) | 504.7 |
| Summe | 1000.0 |

**Tabelle 3:**

| Ergebnis der Blocktests in Glanzfarben | |
|---|---|
| **Polymerdispersion** | **Blockwerte [N/cm**^{**2**}**]** |
| Beispiel 4 | 0.0 |
| Vergl.beispiel 3 | 4.4 |

## Patentansprüche

1. Verfahren zur Herstellung von Vinylester-Ethylen-Mischpolymerisaten mit reduzierter Oberflächenklebrigkeit durch radikalische Polymerisation von einem oder mehreren Vinylestern, Ethylen und Propylen, dadurch gekennzeichnet, daß 50 bis 95 Mol% Vinylester, und
5 bis 50 Mol% eines Gemisches aus Ethylen und Propylen copolymerisiert werden, wobei das molare Mischungsverhältnis von Ethylen zu Propylen von 2/1 bis 5/1 beträgt, und die Glasübergangstemperatur Tg des Mischpolymerisats auf Werte von -15°C bis +15°C eingestellt wird.

2. Verfahren nach Anspruch 1, dadurch gekennzeichnet, daß 50 bis 80 Mol% Vinylacetat und 20 bis 50 Mol% eines Gemisches aus Ethylen und Propylen copolymerisiert werden.

3. Verfahren nach Anspruch 1 oder 2, dadurch gekennzeichnet, daß die Herstellung nach dem Emulsionspolymerisationsverfahren erfolgt.

4. Verfahren nach Anspruch 3, dadurch gekennzeichnet, daß die damit erhaltenen wässrigen Dispersionen mittels Sprühtrocknung getrocknet werden.

5. Verfahren nach Anspruch 1 oder 2, dadurch gekennzeichnet, daß die Herstellung nach dem Lösungspolymerisationsverfahren erfolgt.

6. Verwendung der Verfahrensprodukte nach Anspruch 1 bis 5 als Bindemittel in Beschichtungsmitteln und Lacken, als Klebemittel, als Bindemittel für Textilien, Papier und Bauprodukte, sowie als Bestandteil in Kaugummimassen.

7. Verwendung der Verfahrensprodukte nach Anspruch 3 und 4 als Beschichtungsmittel, als Klebemittel oder als Bindemittel in der Textil-, Papier und Bauindustrie.

8. Verwendung nach Anspruch 7, dadurch gekennzeichnet, daß die Verfahrensprodukte in Glanzfarben verwendet werden.

9. Verwendung der Verfahrensprodukte nach Anspruch 5 als Beschichtungsmittel in Lacken, als Klebemittel und als Bestandteil von Kaugummimassen.

10. Verwendung nach Anspruch 9, dadurch gekennzeichnet, daß die Verfahrensprodukte in Kaugummimassen verwendet werden.

## Claims

1. Process for preparing vinyl ester-ethylene copolymers with reduced surface tack by free-radical polymerization of one or more vinyl esters, ethylene and propylene, characterized in that
from 50 to 95 mol% of vinyl esters and
from 5 to 50 mol% of a mixture made from ethylene and propylene are polymerized, where the molar mixing ratio of ethylene and propylene is from 2/1 to 5/1, and adjusting the glass transition temperature Tg of the copolymer to values of from -15 to +15°C.

2. Process according to Claim 1, characterized in that from 50 to 80 mol% of vinyl acetate and from 20 to 50 mol% of a mixture made from ethylene and propylene are copolymerized.

3. Process according to Claim 1 or 2, characterized in that the preparation takes place by emulsion polymerization.

4. Process according to Claim 3, characterized in that the resultant aqueous dispersions are dried by spray drying.

5. Process according to Claim 1 or 2, characterized in that the preparation takes place by solution polymerization.

6. Use of the products of the process according to Claims 1 to 5 as binders in coating compositions and in paints, as adhesives, as binders for textiles, paper or building products, and also as a constituent in chewing-gum compositions.

7. Use of the products of the process according to Claims 3 and 4 as coating compositions, as adhesives or as binders in the textile, paper or building industry.

8. Use according to Claim 7, characterized in that the products of the process are used in gloss paints.

9. Use of the products of the process according to Claim 5 as coating compositions in paints, as adhesives or as a constituent of chewing-gum compositions.

10. Use according to Claim 9, characterized in that the products of the process are used in chewing-gum compositions.

## Revendications

1. Procédé de préparation de copolymères d'esters vinyliques/éthylène ayant un caractère collant en surface réduit, par polymérisation radicalaire d'un ou de plusieurs esters vinyliques, d'éthylène et de propylène, caractérisé en ce que l'on copolymérise
de 50 à 95% en moles d'esters vinyliques, et
de 5 à 50% en moles d'un mélange d'éthylène et de propylène, le rapport de mélange molaire entre l'éthylène et le propylène étant de 2/1 à 5/1, et la température de transition vitreuse Tv du copolymère étant ajustée à des valeurs de -15°C à +15°C.

2. Procédé selon la revendication 1, caractérisé en ce que l'on copolymérise de 50 à 80% en moles d'acétate de vinyle et de 20 à 50% en moles d'un mélange d'éthylène et de propylène.

3. Procédé selon la revendication 1 ou 2, caractérisé en ce que la préparation est réalisée par le procédé de polymérisation en émulsion.

4. Procédé selon la revendication 3, caractérisé en ce que les dispersions aqueuses ainsi obtenues sont séchées par séchage par pulvérisation.

5. Procédé selon la revendication 1 ou 2, caractérisé en ce que la préparation est réalisée par le procédé de polymérisation en solution.

6. Utilisation des produits du procédé selon les revendications 1 à 5, en tant que liants dans compositions de revêtements et des peintures, en tant qu'adhésifs, en tant que liants pour textiles, papier et produits de construction, ainsi qu'en tant que constituant dans des compositions de gomme à mâcher.

7. Utilisation des produits du procédé selon les revendications 3 et 4, en tant que compositions de revêtements, en tant qu'adhésifs ou en tant que liants dans l'industrie du textile, du papier et du. bâtiment.

8. Utilisation selon la revendication 7, caractérisée en ce que les produits du procédé sont utilisés dans des peintures brillantes.

9. Utilisation des produits du procédé selon la revendication 5, en tant que compositions de revêtements dans des peintures, en tant qu'adhésifs et en tant que constituant de compositions de gomme à mâcher.

10. Utilisation selon la revendication 9, caractérisée en ce que les produits du procédé sont utilisés dans des compositions de gomme à mâcher.
